# EUROPÄISCHE PATENTANMELDUNG

(11) **EP 1 225 076 A2**
(43) Veröffentlichungstag der Anmeldung: **24.07.2002**
(21) Anmeldenummer: 02000490.9
(22) Anmeldetag: 09.01.2002
(51) Int. Cl.: B60K 15/063, B60K 15/067, B60K 15/07, B60K 1/04, F17C 11/00

(54) **Fahrzeug mit Brennstofftank**

(30) Priorität: 20.01.2001 DE 10102636
(71) Anmelder: DaimlerChrysler AG, 70567 Stuttgart (DE)
(72) Erfinder: Köster, Andreas, 73240 Wendlingen/Neckar (DE)

(57) **Zusammenfassung**

Die Erfindung betrifft ein Fahrzeug mit zumindest einem Brennstofftank (5) zur Aufnahme eines Brennmittels zum Betreiben eines Fahrzeugantriebs, wobei der zumindest eine Brennstofftank im Bereich vor einer Vorderachse bzw. hinter einer Hinterachse angeordnet ist und wobei Mittel (6,7) zur Ausführung einer geführten Ausweichbewegung des zumindest einen Brennstofftanks vorgesehen sind, so daß im Aufprallfall eine Bewegung des zumindest einen Brennstofftanks in Richtung der Vorderachse bzw. Hinterachse ausführbar ist.

## Beschreibung

Die Erfindung betrifft ein Fahrzeug mit Brennstofftank gemäß dem Oberbegriff des unabhängigen Anspruchs.

Aus der US 4,570,446 A1 ist ein Fahrzeug mit einem Tank für Wasserstoff als Brennmittel bekannt. Dabei sind mehrere Brennmittelzylinder in einem Gehäuse angeordnet und mit einem wasserstoffspeichernden Medium gefüllt. Wasserstoff kann darin durch Einwirkung hoher Temperaturen desorbiert und einer Verbrennungsmaschine zugeführt werden. Das Absorbieren bzw. Desorbieren des Wasserstoffs erfolgt bei geringen Drücken. Es ist jedoch nicht möglich, gasförmigen Wasserstoff unter hohen Drücken in diesem Fahrzeugtank mitzuführen.

Der Erfindung liegt die Aufgabe zugrunde, ein Fahrzeug mit einem Brennstofftank anzugeben, welches für den Transport und die Speicherung von gasförmigem Wasserstoff geeignet ist.

Diese Aufgabe wird bei einem Fahrzeug mit den Merkmalen des Anspruchs 1 gelöst.

Der Vorteil der erfindungsgemäßen Lösung besteht darin, daß zum einen eine sehr kompakte Vorrichtung geschaffen wird, zum anderen sich die Möglichkeit bietet, Wasserstoff mit Drücken von einigen hundert bar im Fahrzeug mitzuführen. Ein weiterer Vorteil ist, daß im Crashfall der Tank vor zu starker Energieeinwirkung geschützt ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine rückwärtige Ansicht eines Fahrzeugs mit Brennstofftank hinter der Hintersachse und
- Fig. 2: einen Ausschnitt einer Seitenansicht eines erfindungsgemäßen Fahrzeugs.

Die Erfindung ist besonders für Fahrzeuge mit einem Druckgastank geeignet, insbesondere für Fahrzeuge, die mit Wasserstoff betrieben werden.

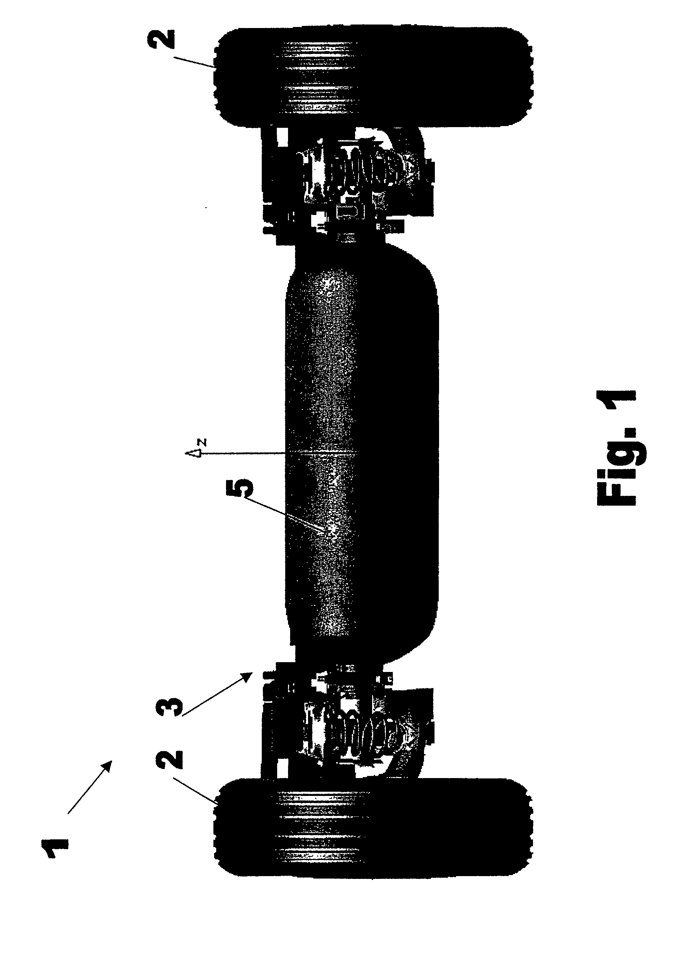

In Fig. 1 ist eine rückwärtige Ansicht eines erfindungsgemäßen Fahrzeugs 1 mit einem Brennstofftank 5 zur Aufnahme eines Brennstoffs zum Betreiben eines Fahrzeugantriebs, wie etwa ein wasserstoffbetriebener Verbrennungsmotor oder ein Brennstoffzellensystem, dargestellt. Der Brennstofftank 5 ist, vom Fahrer aus betrachtet, platzsparend hinter der Hinterachse 3 angeordnet und erstreckt sich zwischen den beiden Hinterrädern. Die Federung der Räder ist angedeutet.

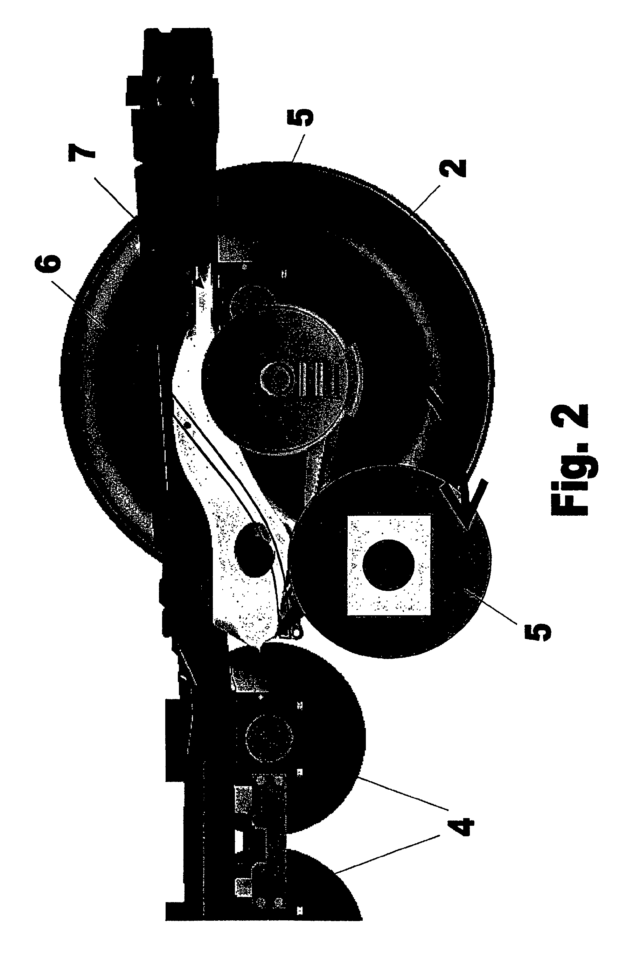

In Fig. 2 ist ein Ausschnitt einer Seitenansicht des Fahrzeugs 1 dargestellt. Die Figur zeigt ein Rad 2 mit der Hinterachse 3 des Fahrzeugs 1. Ein erster Brennstofftank 4 ist, vom Fahrer aus betrachtet, vor der Hinterachse 3, ein weiterer Brennstofftank 5 hinter der Hinterachse 3 angebracht. Die Anordnung der Brennstofftanks 4, 5 im Unterbodenbereich des Fahrzeugs 1 ist besonders platzsparend, und das Auftrennen des gesamten im Fahrzeug mitgeführten Brennstoffvorrats in mehrere Brennstofftanks 4, 5 ermöglicht es, vorhandene Leerräume günstig zu nutzen. Es können auch mehr als zwei Brennstofftanks 4, 5 oder nur ein einziger Brennstofftank vorgesehen sein.

Besonders bei einem Heckaufprall besteht die Gefahr, daß eine Deformierung der Heckpartie des Fahrzeugs 1 einen im Bereich hinter der Hinterachse 3 angebrachter Brennstofftank 5 deformiert oder sogar zum Bersten bringen kann. Gemäß der Erfindung kann ein solches Bersten jedoch weitgehend vermieden werden, indem Mittel zur Ausführung einer geführten Ausweichbewegung des zumindest einen Brennstofftanks 5 vorgesehen sind, so daß im Aufprallfall eine Bewegung des zumindest einen Brennstofftanks 5 in Richtung der Hinterachse 3, vorzugsweise schräg zur Fahrbahn ausführbar ist.

Vorzugsweise umfassen die Mittel zum Ausführen einer Ausweichbewegung eine Gleitbahnschiene 6, auf welcher der zumindest eine Brennstofftank 5 auf einer Bahn in Richtung der Hinterachse, vorzugsweise schräg zur Fahrbahn führbar ist. Dazu ist die Bodenfreiheit des Fahrzeugs bevorzugt so gewählt, daß der Brennstofftank 5 vollständig unter die Hinterachse 3 geschoben werden kann.

Der zumindest eine Brennstofftank 5 ist vorzugsweise mit Gummilagern an die Karosserie geschraubt. Vorzugsweise sind Sollbruchstellen 7 an den Befestigungen des zumindest einen Brennstofftanks 5 vorgesehen, die bei Überbelastung ausknöpfen. Bei einem Heckaufprall kann dann der zumindest eine Brennstofftank 5 nach vorne in Richtung Hinterachse 3 und vor bzw. unter diese Hinterachse 3 geschoben werden. Dabei wird er entlang einer Gleitbahnschiene 6 geführt, die sich über ihm befindet. Zweckmäßigerweise sind zu beiden Seiten des Brennstofftanks je eine Gleitbahnschiene 5 angeordnet, so daß der Brennstofftank 5 nicht verkantet, sondern die Ausweichbewegung im wesentlichen parallel zur Hinterachse 3 ausführen kann. Zur Führung des Brennstofftanks 5 in der Gleitbahnschiene weist der Brennstofftank vorzugsweise entsprechende, jedoch nicht dargestellte Gleitlager auf.

Alternativ können Gleitebenen und/oder Gleitschienen 6 über und unter dem Brennstofftank 5 angeordnet sein, so daß der Brennstofftank 5 zwischen diesen schräg zur Fahrbahn rutschen kann. Dies kann als zusätzlicher Berstschutz wirken.

Das Material der Gleitbahnschienen 5 und/oder Gleitebenen ist möglichst steif ausgeführt. Günstig ist auch eine verstärkte Ausführung, z.B. doppelschalig oder als Sandwichstruktur.

Ist alternativ oder zusätzlich ein Brennstofftank 5 vor der Vorderachse des Fahrzeugs angeordnet, so gelten die Überlegungen entsprechend für einen Frontalaufprall. Der Brennstofftank 5 würde dann im Aufprallfall in Richtung Vorderachse 3, vorzugsweise unter die Vorderachse geschoben.

## Patentansprüche

1. Fahrzeug (1) mit zumindest einem Brennstofftank (5) zur Aufnahme eines Brennmittels zum Betreiben eines Fahrzeugantriebs,
**dadurch gekennzeichnet,**
**daß** der zumindest eine Brennstofftank (5) im Bereich vor einer Vorderachse bzw. hinter einer Hinterachse (3) angeordnet ist und daß Mittel (6, 7) zur Ausführung einer geführten Ausweichbewegung des zumindest einen Brennstofftanks (5) vorgesehen sind, so daß im Aufprallfall eine Bewegung des zumindest einen Brennstofftanks (5) in Richtung der Vorderachse bzw. Hinterachse (3) ausführbar ist.

2. Fahrzeug nach Anspruch 1,
**dadurch gekennzeichnet,**
**daß** der zumindest eine Brennstofftank (5) im Unterbodenbereich des Fahrzeugs angeordnet ist.

3. Fahrzeug nach Anspruch 1,
**dadurch gekennzeichnet,**
**daß** die Mittel (6, 7) zum Ausführen einer Ausweichbewegung zumindest eine Gleitbahnschiene (6) und/oder eine Gleitebene umfassen.

4. Fahrzeug nach Anspruch 1,
**dadurch gekennzeichnet,**
**daß** die Ausgleichsbewegung auf einer Bahn schräg zur Fahrbahn in den Bereich unter der Vorder- bzw. Hinterachse (3) führt.

5. Fahrzeug nach Anspruch 3,
**dadurch gekennzeichnet,**
**daß** der Brennstofftank (5) zumindest ein in der Gleitbahnschiene (6) geführtes Gleitlager aufweist.

6. Fahrzeug nach Anspruch 1,
**dadurch gekennzeichnet,**
**daß** der zumindest eine Brennstofftank (5) zumindest mit einer Befestigung (7) an zumindest einem Tanklager befestigt ist, welche bei Überbelastung auslösbar ist.

7. Fahrzeug nach Anspruch 1,
**dadurch gekennzeichnet,**
**daß** der zumindest einem Brennstofftank (5) eine Hochdrucktank für Druckwasserstoff ist.
